# EUROPEAN PATENT APPLICATION

(11) **EP 4 851 786 A1**
(43) Date of publication of application: **09.12.2026**
(21) Application number: 25181378.8
(22) Date of filing: 06.06.2025
(51) Int. Cl.: G06F 8/65

(54) **METHOD, DEVICE AND SECURE ELEMENT FOR UPGRADING AN APPLICATION ON THE SECURE ELEMENT**

(71) Applicant: Giesecke+Devrient advance52 GmbH, 81677 München (DE)
(72) Inventor: BOHN, Markus, 81677 München (DE); MARTINI, Ullrich, 81677 München (DE)
(74) Representative: Ter Meer und Partner mbB

(57) **Abstract**

Provided is a method for upgrading an application on a secure element. The method comprises: extracting internal data of the application stored in a secured storage portion of the secure element, preferably upon receiving an upgrade request; encrypting at least a first portion of the internal data using a key of the secure element; transferring the encrypted internal data out of the secured storage portion; deleting the application; loading a new version of the application into the secured storage portion; loading the encrypted internal data into the secured storage portion; decrypting the encrypted internal data; and restoring the internal data in the new version of the application.

## Description

### Technical field

The present invention relates to a method for upgrading an application on a secure element, a device for upgrading an application on a secure element and a corresponding secure element. In particular, the invention relates to upgrading an application using insecure memory for temporarily outsourcing or offloading user's data of the application.

### Technical background

Today, the software of modern digital devices needs to be regularly adapted and or developed further, e. g. for fixing bugs, adding new features, etc. Accordingly, upgrade processes over the air, especially where there is a network connection available are ubiquitous.

Likewise, secure elements, in particular smart cards, need a software upgrade mechanism. Regarding deployment, the fundamental difference between upgrading classic software and smart card software is the existence of persistent instances of software programs. These instances are created and personalized by service providers with both user data and secret or sensitive data. The personalization process can sometimes be complex and expensive and ideally should not be repeated in case of software upgrades. It is not desired that service providers simply delete their applications (and related data) on the respective secure element, then install and personalize them again.

The GlobalPlatform Technology: "Executable Load file Upgrade", Card Specification v2.3 - Amendment H, Version 1.1, in short "GP Amendment H", provides a solution to this problem, by specifying an upgrade session consisting of a saving phase, a loading phase and a restore phase.

In the saving phase, an existing application instance created from the old ELF version can save its instance data using the upgrade API. The old ELF version, its application instances, and their instance data are then deleted, except for the instance data saved using the upgrade API and, possibly, automatically saved registry data. The instance data and registry data remain in the security domain with which the old ELF version was associated.

In the loading phase, the new ELF version is loaded. Thereafter, the restore phase can start.

In the restore phase, new Application instances are automatically created from the new ELF version, in the same number and with the same AIDs as previously existing application instances. Each new application instance is permitted to restore the saved instance data from the respective previous application instance that had the same AID. Also, the registry data of the previous application instance is automatically restored and associated with the new application instance.

However, executable code for software packages such as applications generally increases, whereby the size of the application itself and/or the number of application instances hosted by an ELF may increase, such that the overall size of ELFs tends to increase. The secure element, in contrast, remains rather limited in memory space (both RAM and NVRAM). It is very common that after personalization and deployment, a secure element has almost no memory space left. Accordingly, in some occasions, there may not be enough memory space available within the same security domain to load the new ELF version.

### Technical problem

Thus, a more flexible upgrade mechanism for a secure element is needed, without bargaining on security, and preferably being prepared for increasing sizes of software packages to be upgraded. Moreover, a corresponding device for upgrading an application on a secure element and a corresponding secure element are needed.

### Summary of the invention

At least one of the objectives is solved by the method, the device and the secure element according to the independent claims. Further embodiments are specified in the respective dependent claims.

In one aspect of the present invention, a method for upgrading an application on a secure element is provided. The method comprises: extracting internal data of the application stored in a secured storage portion of the secure element, preferably upon receiving an upgrade request; encrypting at least a first portion of the internal data using a key of the secure element; transferring the encrypted internal data out of the secured storage portion; deleting the application; loading a new version of the application into the secured storage portion; loading the encrypted internal data into the secured storage portion; decrypting the encrypted internal data; and restoring the internal data in the new version of the application.

The gist of the invention is to modify the upgrade process as specified in the Amendment H to delete the old version of the application and remove at least a first portion of the internal data of the application of the secured storage portion to free memory for loading the new version of the application. By encrypting the internal data using a key, preferably a symmetric key, that is associated with the secure element, and preferably always remains within the secure element, the first portion of the internal data may be offloaded to free additional memory.

In another aspect of the present invention, a device for upgrading an application on a secure element is provided. the device comprising: a receiving unit, configured to receive a request for upgrading an application, the request comprising a first identifier, identifying the application loaded on the secure element, a second identifier, identifying the new version to be loaded on the secure element, and an upgrade option. The device further comprises a processing unit, which is configured to: access a secured storage portion of the secure element; receive an encrypted internal data of the secure element; load a new version of the application into the secured storage portion; and load the encrypted internal data into the secured storage portion.

The device is configured to receive the encrypted internal data, thereby enabling to securely offload at least the first portion of the internal data during the upgrade session. The device may delay loading the new application into the secure element until enough memory has been released in the secure storage portion to store the new application in the secure storage portion.

According to another aspect of the disclosure, a secure element for securely communicating over a communication network is provided. The secure element comprises: a storage unit, comprising a secure storage portion in which an application is stored; and a control unit. The control unit is configured to: extract internal data of the application, preferably upon receiving an upgrade request; encrypting at least a first portion of the internal data using a key of the secure element; transferring the encrypted internal data out of the secured storage portion; deleting the application; receiving a new version of the application and storing the new version in the secure storage portion; receiving or loading the encrypted internal data into the secure storage portion decrypting the encrypted internal data; and restoring the internal data in the new version of the application.

The secure element is enabled to support a more flexible upgrade of an application, since the control unit is configured to release a considerable amount of memory in the secure storage portion by transferring or offloading at least a portion of the internal data. Encrypting the internal data to be offloaded ensures that the internal data cannot be accessed by an unauthorized party, thereby maintaining the high security standard of the solution according to GP Amendment H.

According to another aspect of the disclosure, a computer-readable storage medium is provided, in which instructions are stored, wherein the instructions cause the control unit of the secure element to execute the following steps: extracting internal data of the application, preferably upon receiving an upgrade request; encrypting at least a first portion of the internal data using a key of the secure element; transferring the encrypted internal data out of the secured storage portion; deleting the application; receiving a new version of the application and storing the new version in the secure storage portion; receiving or loading the encrypted internal data into the secure storage portion decrypting the encrypted internal data; and restoring the internal data in the new version of the application.

In a preferred embodiment, the method comprises: receiving an upgrade request; packaging all important application-internal data; encrypting the packaged application-internal data with a (symmetric) key or secret. Storing the encrypted packaged application-internal data either in the device or in an external data storage, wherein the external data storage may be hosted by a server. The method further includes upgrading the application to a new version within the secure element; reading the key in the new version of application; importing the encrypted packaged application-internal data into the new version of the application; and decrypting the encrypted packaged application-internal data using the key.

The method, the device and of the secure element according to any of above aspects or according to the preferred embodiment may further include at least one of the following features:
The upgrade request may be received from a user interaction or an automated check.

The key of a secure element specific cryptographic key pair may never leave the secure element, in particular a security domain to which the application or an executable load file, ELF, containing the application, is associated.

The key may be generated based on symmetric key cryptography. Accordingly, the same key may be used for encrypting at least the first portion of the internal data and for decrypting the encrypted internal data. Since encrypting and decrypting is configured to be executed within the same secure element, it is beneficial to use a symmetric key cryptography. Alternatively, a key pair including a private key and a public key may be generated based on asymmetric key cryptography. In this alternative, at least the first portion of the internal data may be encrypted using the public key of the key pair, and the encrypted internal data may be decrypted using the private key of the key pair. In comparison to the symmetric key alternative, according to which only one key needs to be stored, the key pair according to the asymmetric key alternative requires more memory to store the key(s) for encrypting and decrypting the respective internal data on the same secure element.

Encrypting at least a first portion of the internal data may include generating encrypted internal data. Decrypting the encrypted internal data may provide the at least first portion of the internal data.

Restoring the internal data may include restoring the decrypted internal data, i. e., the at least first portion of the internal data. Restoring the internal data may further include restoring a second portion of the internal data which has not been encrypted and transferred out of the secured storage portion. Restoring the internal data may be executed automatically by the new version of the application.

The method may further comprise generating integrity information of at least the first portion of the internal data, preferably prior to encrypting at least the first portion of the internal data; storing the integrity information in the secured storage portion; and verifying at least the first portion of the internal data based on the integrity information after decrypting the encrypted internal data. The method may further comprise restoring the internal data in the new version of the application if the verifying yields a positive result. The method may further comprise aborting the upgrade process if the verifying yields a negative result.

The integrity information may be or include one or more of a signature, hash, and a message authentication code, HMAC. A positive result of the verifying step may include that the integrity information stored in the secure storage unit is identical to a new integrity information generated of at least the first portion of the internal data after decrypting the encrypted internal data. A negative result may be or include any deviation from a condition for the positive result.

By verifying the integrity of the offloaded portion of the internal data, attacks based on a rollback mechanism may be prevented.

The application may be installed and/or stored in the secured storage portion on the secure element.

The method may further include starting an upgrade session, preferably upon receiving an upgrade request.

The method may further include storing the encrypted internal data outside of the secured storage portion and/or outside of the secure element.

The method may further include generating the key fresh for encrypting at least the first portion of the internal data, preferably fresh for each encryption of at least the first portion of the internal data and/or each upgrade of the application; and storing the key in the secured storage portion. The (fresh) key may be used for both encrypting at least a first portion of the internal data and decrypting the encrypted internal data.

By generating the key or the secret fresh for each upgrade or even each encryption of internal data (an upgrade may comprise upgrading more than one application within the same upgrade session) enables an inherent key rotation which further improves security of the upgrade process.

The loading of the new version of the application into the secured storage portion may include storing and/or installing the new version of the application as an upgraded application. The method may further comprise: loading the encrypted internal data into the upgraded application; loading the key into the upgraded application; and decrypting the encrypted internal data within the upgraded application.

Loading the key, preferably the respective fresh key into the new version of the application may be processed according to the specification of GP Amendment H. This procedure may ensure that the (fresh) key never leaves the secure storage portion in which the application is stored. The application or an EFL including the application may be configured to use the (fresh) key for decrypting the encrypted internal data within the new version of the application. Thereby at least the first portion of the internal data may be restored in the new version of the application. A remaining portion of the internal data may be transferred to the new version of the application according to the specification of GP Amendment H.

The internal data may include application usage data, application administration data and personalized data. The personalized data may include key, PINs, and other security relevant information that is unique for a respective user profile of the secure element. The application usage data may be or include personal information which is also protect-worthy, in particular due to the General Data Protection Regulation (GDPR). The application administration data may be the least security relevant data in comparison to the application usage data and the personalized data, however, still worth to protect.

The application usage may include tokens for electronic payment transactions. Tokens - also referred to as digital assets, electronic coins, coin data sets - may represent any digital asset, in particular a digital currency, preferably a central bank digital currency, CBDC. A token includes or consists of a private key of a token individual cryptographic key pair and a monetary value. The term "transaction" or "electronic payment transaction" may represent a transaction of a (monetary value) token between a sender and a recipient.

The internal data may include generic objects of the application. The generic objects may substitute custom objects of the application which enables to restore the custom objects of the application in the new version of the application. The generic objects may be generated using an Element interface, as specified in the GP Amendment H. The method may be configured to organize the internal data into generic objects before or during extracting the internal data from the application.

The first portion of the internal data may include application usage data and/or application administration data. A second portion of the internal data may include (only) personalized data. The second portion of the internal data is preferably disjunct from the first portion of the internal data. The method may further include encrypting only the first portion of the internal data using the (fresh) key and storing, i.e., maintaining, the second portion of the internal data in the secured storage portion. This procedure has the advantage that the second portion of the internal data may always remain within the secure storage portion, like the (fresh) key, thereby maximizing the security standard for the most vulnerable portion of the internal data.

Alternatively, the method may include encrypting the whole internal data using the (fresh) key. This alternative procedure optimizes the memory space for loading the new version of the application into the secure element, while still guaranteeing a high security standard.

Transferring of the encrypted internal data may include transferring the encrypted internal data out of the secure element. The method may further include storing the encrypted internal data in an unsecure memory. The method may further include storing the encrypted internal data in a memory of) a device hosting the secure element and/or connected to the secure element via near-field communication. Transferring the encrypted internal data may further include transmitting the encrypted internal data over a communication network to a server and/or an external storage unit. Storing the encrypted internal data outside of the secure element may be preferred over storing the encrypted internal data within the storage unit of the secure element outside the secure storage portion as it generally releases memory of the secure element, not only in the secure storage portion.

The method may further include determining a size of the internal data after being extracted from the application; and comparing the size of the internal data against a predetermined threshold size, wherein if the size of the internal data is equal to or larger than the predetermined threshold size, encrypting at least the first portion of the internal data. This size check may provide a measure for switching between the standard upgrade procedure as e. g. specified by GP Amendment H, and the flexible version according to aspects of the disclosure.

The application may be a Java Card Applet instance contained in an executable load file, ELF. The internal data may be instance data of the Java Card Applet instance. Deleting the application may include deleting the ELF; Loading a new version of the application may include loading a new ELF including the new version of the application. Preferably, loading the encrypted internal data may include loading the encrypted internal data into the new ELF. An ELF may be a Java Card package. An executable module may be a Java card Applet class. Each one of the ELF, the executable module and the application may be identified by an application identifier, AID.

The application may be associated with a security domain of the secure element. The method may further comprise associating the upgraded application, i.e., the new version of the application to the security domain. The (fresh) key may be also associated with the security domain, and remain during its entire existence within the security domain. The security domain may be implemented on or occupy the secure storage portion.

The method may further include receiving a request for upgrading the application. The request may comprising a first identifier, preferably a first AID, identifying the application loaded on the secure element. The request may optionally comprising a second identifier, preferably a second AID, identifying the new version of the application to be loaded on the secure element. The request may further comprise an upgrade option. Preferably, the upgrade option determines which portion of the internal data to be offloaded or transferred out of the secure storage portion during upgrading the application. The request may include a MANAGE ELF UPGRADE command. Upon receiving the request, the secure element may initiate an upgrade session. The upgrade option may determine to offload only the first portion of the internal data. Accordingly, the method includes encrypting only the first portion of the internal data. The upgrade option may determine to offload the entire internal data, based on which the method includes encrypting the entire internal data. The upgrade option may include a fraction number, i.e., a number between 0 and 1, including 0 and 1, and preferably 0.1 or 0.2 or 0.3 or 0.4 or 0.5 or 0.6 or 0.7 or 0.8 or 0.9. The fraction number indicates the fraction of internal data to be transferred out of the secure storage portion, preferably out of the secure element during the upgrade session.

The method may further comprise deduplicating the internal data upon extraction from the application. This feature reduces the size of the internal data, thereby releasing more memory space for the new version of the application during the upgrade session and/or reducing the amount of data to be transferred out of the secure element and back therein, possibly over the internet.

The device may further comprise a memory. The processing unit may be further configured to store the encrypted internal data received from the secure element in the memory.

In addition, or alternatively, the device may further comprise a transmitting unit. The processing unit may be further configured to forward the encrypted internal data received from the secure element via the transmitting unit over a communication network to a server. The processing unit may be further configured to load the encrypted internal data from the server for loading the encrypted internal data into the secured storage portion.

The control unit of the secure element may be further configured to generate the key fresh for encrypting at least the first portion of the internal data, preferably fresh for each encryption of at least the first portion of the internal data and/or each upgrade of the application. The control unit of the secure element may be further configured to store the key in the secure storage portion. The control unit may be further configured to delete the key after having the internal data restored in the new version of the application.

The term "secure element" is synonymous with the term "UICC", "eUICC", "iUICC", "Subscriber Identity Module", "Smart Card", "iUICC", "Integrated eUICC", "Integrated Secure Element", "embedded Secure Element", "Secure Element", "SIM", "eSIM" or "iSIM". Secure element also includes USIM, TSIM, ISIM, CSIM or R-UIM.

A secure element in the sense of the invention is an electronic module reduced in size and resource scope, which may have a control unit (microcontroller) and at least one interface (data interface) for communication with instances located outside the secure element, such as terminal devices, servers, etc.. This communication preferably takes place via a connection protocol, in the case of a secure element, in particular a protocol in accordance with the ETSI TS 102 221 or ISO-7816 standard.

The secure element may also be an integral part of a larger integrated circuit, such as a modem or application processor. Such secure elements are referred to as "integrated UICC," "integrated TRE," "integrated eUICC," or "integrated secure element." Such secure elements are permanently integrated into an SoC as an integrated processor block and can be connected via an in-chip bus. The secure element has, for example, an internal or external secure non-volatile memory area in which the identity data is securely placed to prevent tampering and/or misuse attempts during identification and/or authentication to the network.

In one embodiment, the secure element can be operable by means of a terminal device, whereby the secure element in this embodiment is self-sufficient except for supply signals such as supply voltage, clock, reset, etc. Then the secure element may have an interface (data interface, communication interface) for communication with the terminal device, into which the secure element may be inserted ready for operation. This communication preferably takes place via a connection protocol, in particular a protocol in accordance with the ETSI TS 102 221 or ISO-7816 standard.

In one embodiment, the secure element may be or include a secure cryptographic device, e.g., as specified according to ISO 13491-1. The secure element may be or include a device that provides physically and logically protected cryptographic services and storage, and which can be integrated into a larger system, such as an automated teller machine (ATM) or point-of-sale (POS) terminal.

### Short description of the drawings

In the following, various aspects of the invention or further embodiments and advantages of the invention are explained in more detail with respect to the drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows a schematic of a method for upgrading an application according to prior art.
Fig. 2 shows a schematic of a method for upgrading an application according to an aspect of the invention.
Fig. 3 shows an exemplary embodiment of a device according to an aspect of the invention.
Fig. 4 shows an exemplary embodiment of a secure element according to an aspect of the invention.

### Detailed description of the drawings

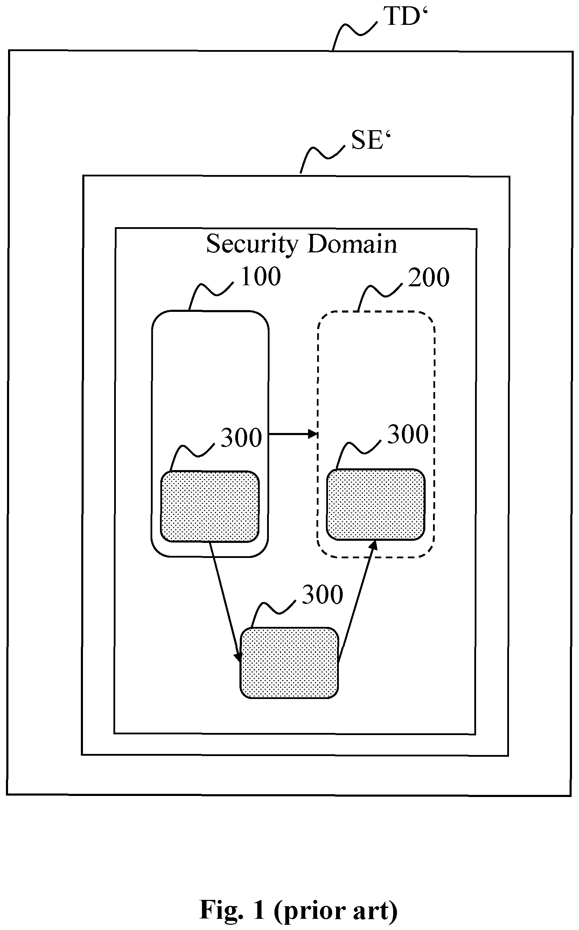

In Fig. 1 a schematic of a method for upgrading an application according to prior art is depicted. The schematic shows a device TD' which hosts a secure element SE'. The secure element SE' includes a security domain, in which an application 100 is installed. The application 100 may be a Java Card application instance contained in an ELF. The application 100 includes internal data 300.

According to GP Amendment H, during an upgrade session the existing application (100) can save its internal data 300 using the upgrade API. The old ELF version, its applications, and their internal data are then deleted, except for the internal data (300) saved using the upgrade API. The internal data (300) remains in the security domain with which the old ELF version was associated.

Subsequently, in the loading phase, the new ELF version is loaded. Thereafter, the restore phase can start.

In the restore phase, a new version of the application (200) is automatically created from the new ELF version with the same AIDs as the previously existing application (100). The new version of the application (200), more precisely the new application instance, is permitted to restore the saved internal data (300) from the previously existing application (100) that had the same AID.

The saved internal data (300) occupies memory within the security domain, and therefore reduces the available memory for loading the new ELF version.

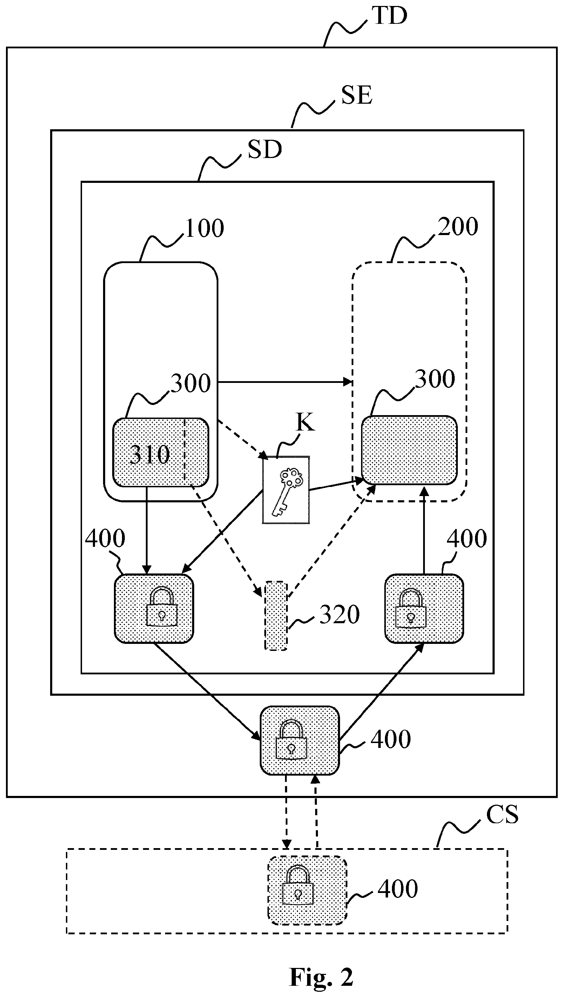

In Fig. 2 a schematic of a method for upgrading an application according to the invention is depicted. The schematic shows a device TD which hosts a secure element SE. The secure element SE includes a secure storage portion SD), in which an application 100 is installed. The application 100 may be a Java Card application instance contained in an ELF. The application 100 includes internal data 300. In the example of Fig. 2 the internal data 300 includes a first portion (310) and a second portion (320). In other examples, the internal data 300 may include a first portion (310) and several further portions (now shown).

In the secure storage portion SD a key K is available. The key K may be generated by a control unit of the secure element SE. The key K may be generated by the application 100. The gist of the invention is to use the key K for encrypting at least the first portion of the internal data 310 into encrypted internal data 400, and to transfer the encrypted internal data 400 out of the secure storage portion SD. In the example of Fig. 2, the encrypted internal data 400 is transferred to the secure element SE, where it may be stored in memory or from which is may be forwarded to a server CS, e. g., a cloud server. The encrypted internal data is preferably stored outside of the secure element SE during loading (and installing) the new version of the application 200.

The key K and optionally a second portion of the internal data (320) remain stored in the secure storage portion (SD), at least during the upgrade session. Compared to typical sizes of the internal data (300), the size of the key K is marginal. Accordingly, significantly more memory is available for loading the new version of the application 200 into the secure storage portion SD as compared to the example of Fig. 1.

After having loaded the new version of the application 200 into the secure storage portion SD, the method further includes loading the encrypted internal data 400 back into the secure storage portion. By that time, the size of the new version of the application stored in the secure storage portion has been already reduced due to installing the new version of the application 200 so that sufficient memory is available in the secure storage portion SD to load the encrypted internal data 400.

The method further includes decrypting the encrypted internal data 400 and restoring the internal data 300 in the new version of the application 200. Restoring the internal data 300 may include restoring the first portion of the internal data 310 after being decrypted and restoring the second portion of the internal data 320 according to GP Amendment H. The encrypted internal data 400 may be decrypted within the new version of the application 200. Accordingly, the key K may be transferred to the new version of the application, preferably using the procedure of GP Amendment H.

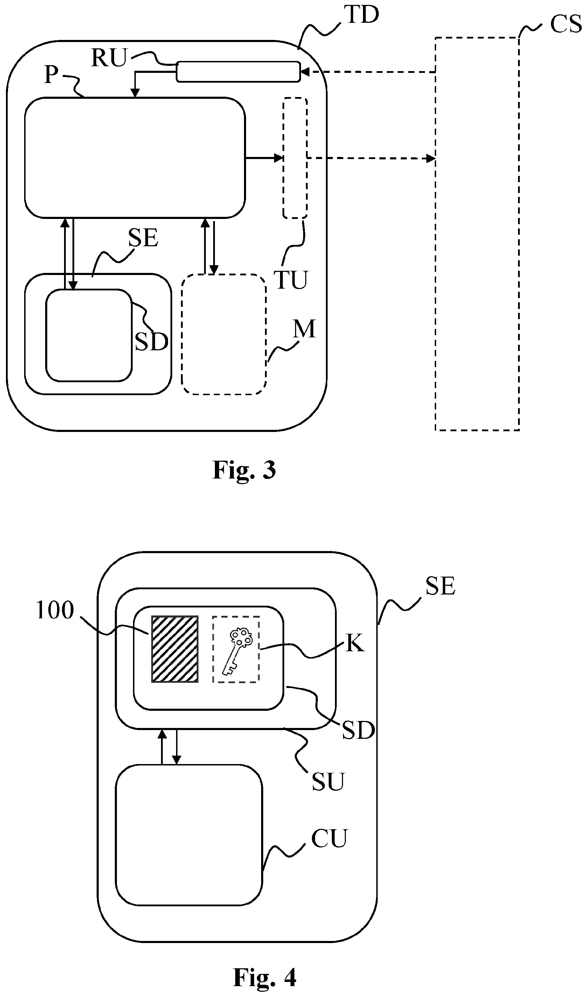

In Fig. 3 an exemplary embodiment of a device TD according to an aspect of the invention is depicted. The device TD includes a processing unit P, a receiving unit RU, and, at least in the example of Fig. 3, a secure element SE. The secure element SE is described further with respect to Fig. 4.

The receiving unit RU is configured to receive a request for upgrading an application 100 on the secure element SE. The request comprises a first identifier, identifying the application 100 loaded on the secure element SE, a second identifier, identifying the new version of the application 200 to be loaded on the secure element SE, and an upgrade option. The receiving unit RU is operationally coupled to the processing unit P to forward the request to the processing unit P.

The processing unit P is configured to access a secure storage portion SD of the secure element SE, wherein the application 100 to be upgraded is stored in the secure storage portion SD. The processing unit P is configured to, upon executing the request, receive or extract an encrypted internal data 400 of the application 100 on the secure element SE; load a new version of the application 200 into the secured storage portion SD; and load the encrypted internal data 400 into the secured storage portion SD.

The device TD may further include a memory M and a transmitting unit TU. The processing unit P may be further configured to store the encrypted internal data 400 in the memory M and/or to transmit the encrypted internal data 400 to an external storage, e. g., at a server CS.

In Fig. 4 a schematic representation of an exemplary embodiment of a secure element SE according to an aspect of the disclosure is depicted. The secure element SE includes a storage unit SU and a control unit CU.

In a secure storage portion SD of the storage unit SU, an application 100 is stored. Moreover, a key K of a secure element specific cryptographic key pair is stored in the secure storage portion SD, preferably only within an upgrade session. Delimiting the life time of the key K further increases the security for offloading at least the first portion of the internal data 310. The control unit CU may be configured to generate the key K.

Before loading a new version of the application 200, the internal data 300 of the application 100 is extracted, secured, and at least partially offloaded as described with respect to Fig. 2. Subsequently, the application 100 is deleted. In case the key K is provided by the application 100, the method may further include verifying whether the key K is stored within the secure storage portion SD before deleting the application 100.

After having received the new version of the application 200 into the secure storage portion SD, the control unit CU is further configured to receive and/or load the encrypted internal data 400 into the secure storage portion SD; decrypt the encrypted internal data 400; and restore the internal data 300 in the new version of the application 200. The control unit CU may be further configured to restore the internal data 300 by restoring the first portion of the internal data 310 after being decrypted and optionally by restoring the second portion of the internal data 320 according to GP Amendment H. The encrypted internal data 400 may be decrypted within the new version of the application 200. Accordingly, the control unit CU may be further configured to transfer the key K to the new version of the application, preferably using the procedure of GP Amendment H.

### Reference signs

- SE: secure element
- CU: control unit
- SU: storage unit
- SD: secure storage portion
- K: key

- TD: device
- P: processing unit
- M: memory
- RU: receiving unit
- TU: transmitting unit
- CS: server

- 100: application
- 200: new version of the application
- 300: internal data
- 310: first portion of the internal data
- 320: second portion of the internal data
- 400: encrypted internal data

## Claims

1. A method for upgrading an application (100) on a secure element (SE), the method comprising:
extracting internal data (300) of the application (100) stored in a secured storage portion (SD) of the secure element (SE);
encrypting at least a first portion of the internal data (310) using a key (K) of the secure element;
transferring the encrypted internal data (400) out of the secured storage portion (SD);
deleting the application (100);
loading a new version of the application (200) into the secured storage portion (SD);
loading the encrypted internal data (400) into the secured storage portion (SD);
decrypting the encrypted internal data (400); and
restoring the internal data (300) in the new version of the application (200).

2. The method of claim 1, further comprising:
generating integrity information of at least the first portion of the internal data (310), preferably prior to encrypting at least the first portion of the internal data (310);
storing the integrity information in the secured storage portion (SD); and
verifying at least the first portion of the internal data (310) based on the integrity information after decrypting the encrypted internal data (400), wherein the method further comprises restoring the internal data (300) in the new version of the application (200) if the verifying yields a positive result.

3. The method of claim 1, wherein the application (100) is installed and/or stored in the secured storage portion (SD); wherein the method further includes starting an upgrade session, preferably upon receiving an upgrade request; and/or wherein the method further includes storing the encrypted internal data (400) outside of the secured storage portion (SD).

4. The method of any of the preceding claims,, further comprising:
generating the key (K) fresh for encrypting at least the first portion of the internal data (310), preferably fresh for each encryption of at least the first portion of the internal data (310) and/or each upgrade of the application (100); and
storing the key (K) in the secured storage portion (SD); and/or
wherein the key (K) is used for both encrypting at least a first portion of the internal data (310) and decrypting the encrypted internal data (400).

5. The method of any of the preceding claims, wherein the loading the new version of the application (200) into the secured storage portion (SD) includes storing and/or installing the new version of the application (200) as an upgraded application, wherein the method further comprises:
loading the encrypted internal data (400) into the upgraded application;
loading the key (K) into the upgraded application; and
decrypting the encrypted internal data (400) using the key (K) within the upgraded application.

6. The method of any of the preceding claims, wherein the internal data (300) includes application usage data, application administration data and personalized data; and/or wherein the internal data (300) includes generic objects of the application (100); and/or wherein the first portion of the internal data (310) includes application usage data and application administration data, wherein a second portion of the internal data (320) includes personalized data, wherein the second portion of the internal data (320) is preferably disjunct from the first portion of the internal data (310); and/or wherein the method further includes encrypting only the first portion of the internal data (310) using the key (K) and storing the second portion of the internal data (320) in the secured storage portion (SD), or encrypting the entire internal data (300) using the key (K).

7. The method of any of the preceding claims, wherein transferring of the encrypted internal data (400) includes transferring the encrypted internal data (400) out of the secure element (SE), wherein the method further includes storing the encrypted internal data (400) in a device (TD) hosting the secure element (SE) and/or connected to the secure element (SE) via near-field communication; and/or wherein transferring the encrypted internal data (400) includes transmitting the encrypted internal data (400) over a communication network to a server (CS).

8. The method of any of the preceding claims, wherein the method further includes:
determining a size of the internal data (300) after being extracted from the application (100); and
comparing the size of the internal data (300) against a predetermined threshold size, wherein if the size of the internal data (300) is equal to or larger than the predetermined threshold size, encrypting at least the first portion of the internal data (310).

9. The method of any of the preceding claims, wherein the application (100) is a Java Card Applet instance contained in an executable load file, ELF, and wherein the internal data (300) is instance data of the Java Card Applet instance, wherein:
deleting the application (100) includes deleting the ELF;
loading a new version of the application (200) includes loading a new ELF including the new version of the application (200); and
preferably loading the encrypted internal data (400) includes loading the encrypted internal data (400) into the new ELF.

10. The method of any of the preceding claims, wherein the method further includes receiving a request for upgrading the application (100), the request comprising a first identifier, identifying the application loaded on the secure element (SE), a second identifier, identifying the new version of the application (200) to be loaded on the secure element (SE), and an upgrade option, wherein preferably the upgrade option determines which portion of the internal data (300) to be offloaded during upgrading the application (100); wherein the request preferably includes a MANAGE ELF UPGRADE command.

11. The method of any of the preceding claims, further comprising deduplicating the internal data (300) during or upon extraction from the application (100).

12. A device (TD) for upgrading an application (100) on a secure element (SE), the device (TD) comprising:
a receiving unit (RU), configured to receive a request for upgrading an application (100), the request comprising a first identifier, identifying the application (100) loaded on the secure element (SE), a second identifier, identifying the new version of the application (200) to be loaded on the secure element (SE), and an upgrade option; and
a processing unit (P), configured to:
access a secured storage portion (SD) of the secure element (SE);
receive an encrypted internal data (400) of the secure element (SE);
load a new version of the application (200) into the secured storage portion (SD); and
load the encrypted internal data (400) into the secured storage portion (SD).

13. The device of claim 12, further comprising a memory (M), wherein the processing unit (P) is further configured to store the encrypted internal data (400) received from the secure element (SE) in the memory (M); and/or
the device (TD) further comprising a transmitting unit (TU), wherein the processing unit (P) is further configured to forward the encrypted internal data (400) received from the secure element (SE) via the transmitting unit (TU) over a communication network to a server (CS), and to load the encrypted internal data (400) from the server (CS) for loading the encrypted internal data (400) into the secured storage portion (SD).

14. A secure element (SE) for securely communicating over a communication network, the secure element (SE) comprising: a storage unit (SU), comprising a secure storage portion (SD) in which an application (100) is stored; and a control unit (CU), which is configured to:
extract internal data (300) of the application (100);
encrypt at least a first portion of the internal data (310) using a key (K) of the secure element (SE);
transfer the encrypted internal data (400) out of the secured storage portion (SD);
delete the application (100);
receive a new version of the application (200) and storing the new version of the application (200) in the secure storage portion (SD);
receive and/or load the encrypted internal data (400) into the secure storage portion (SD);
decrypt the encrypted internal data (400); and
restore the internal data (300) in the new version of the application (200).

15. The secure element (SE) of claim 14, wherein the control unit (CU) is further configured to:
generate the key (K) fresh for encrypting at least the first portion of the internal data (310), preferably fresh for each encryption of at least the first portion of the internal data (310) and/or each upgrade of the application (100); and
store the key (K) in the secure storage portion (SD).

## Amended claims

### Amended claims in accordance with Rule 137(2) EPC.

1. A method for upgrading an application (100) on a secure element (SE), the method comprising:
extracting internal data (300) of the application (100) stored in a secured storage portion (SD) of the secure element (SE), the internal data (300) including application usage data, application administration data and personalized data;
encrypting at least a first portion of the internal data (310) using a key (K) of the secure element;
transferring the encrypted internal data (400) out of the secured storage portion (SD);
deleting the application (100);
loading a new version of the application (200) into the secured storage portion (SD),
wherein the loading includes storing and/or installing the new version of the application (200) as an upgraded application;
loading the encrypted internal data (400) into the secured storage portion (SD);
decrypting the encrypted internal data (400); and
restoring the internal data (300) in the new version of the application (200);
**characterized by**
the application usage data including tokens for electronic payment transactions;
loading the encrypted internal data (400) into the upgraded application;
loading the key (K) into the upgraded application; and
decrypting the encrypted internal data (400) using the key (K) within the upgraded application.

2. The method of claim 1, further comprising:
generating integrity information of at least the first portion of the internal data (310), preferably prior to encrypting at least the first portion of the internal data (310);
storing the integrity information in the secured storage portion (SD); and
verifying at least the first portion of the internal data (310) based on the integrity information after decrypting the encrypted internal data (400), wherein the method further comprises restoring the internal data (300) in the new version of the application (200) if the verifying yields a positive result.

3. The method of claim 1, wherein the application (100) is installed and/or stored in the secured storage portion (SD); wherein the method further includes starting an upgrade session, preferably upon receiving an upgrade request; and/or wherein the method further includes storing the encrypted internal data (400) outside of the secured storage portion (SD).

4. The method of any of the preceding claims,, further comprising:
generating the key (K) fresh for encrypting at least the first portion of the internal data (310), preferably fresh for each encryption of at least the first portion of the internal data (310) and/or each upgrade of the application (100); and
storing the key (K) in the secured storage portion (SD); and/or
wherein the key (K) is used for both encrypting at least a first portion of the internal data (310) and decrypting the encrypted internal data (400).

5. The method of any of the preceding claims, wherein the internal data (300) includes generic objects of the application (100); and/or wherein the first portion of the internal data (310) includes application usage data and application administration data, wherein a second portion of the internal data (320) includes personalized data, wherein the second portion of the internal data (320) is preferably disjunct from the first portion of the internal data (310); and/or wherein the method further includes encrypting only the first portion of the internal data (310) using the key (K) and storing the second portion of the internal data (320) in the secured storage portion (SD), or encrypting the entire internal data (300) using the key (K).

6. The method of any of the preceding claims, wherein transferring of the encrypted internal data (400) includes transferring the encrypted internal data (400) out of the secure element (SE), wherein the method further includes storing the encrypted internal data (400) in a device (TD) hosting the secure element (SE) and/or connected to the secure element (SE) via near-field communication; and/or wherein transferring the encrypted internal data (400) includes transmitting the encrypted internal data (400) over a communication network to a server (CS).

7. The method of any of the preceding claims, wherein the method further includes:
determining a size of the internal data (300) after being extracted from the application (100); and
comparing the size of the internal data (300) against a predetermined threshold size, wherein if the size of the internal data (300) is equal to or larger than the predetermined threshold size, encrypting at least the first portion of the internal data (310).

8. The method of any of the preceding claims, wherein the application (100) is a Java Card Applet instance contained in an executable load file, ELF, and wherein the internal data (300) is instance data of the Java Card Applet instance, wherein:
deleting the application (100) includes deleting the ELF;
loading a new version of the application (200) includes loading a new ELF including the new version of the application (200); and
preferably loading the encrypted internal data (400) includes loading the encrypted internal data (400) into the new ELF.

9. The method of any of the preceding claims, wherein the method further includes receiving a request for upgrading the application (100), the request comprising a first identifier, identifying the application loaded on the secure element (SE), a second identifier, identifying the new version of the application (200) to be loaded on the secure element (SE), and an upgrade option, wherein preferably the upgrade option determines which portion of the internal data (300) to be offloaded during upgrading the application (100); wherein the request preferably includes a MANAGE ELF UPGRADE command.

10. The method of any of the preceding claims, further comprising deduplicating the internal data (300) during or upon extraction from the application (100).

11. A secure element (SE) for securely communicating over a communication network, the secure element (SE) comprising: a storage unit (SU), comprising a secure storage portion (SD) in which an application (100) is stored; and a control unit (CU), which is configured to:
extract internal data (300) of the application (100), the internal data (300) including application usage data, application administration data and personalized data;
encrypt at least a first portion of the internal data (310) using a key (K) of the secure element (SE);
transfer the encrypted internal data (400) out of the secured storage portion (SD);
delete the application (100);
receive a new version of the application (200) and storing the new version of the application (200) in the secure storage portion (SD) as an upgraded application;
receive and/or load the encrypted internal data (400) into the secure storage portion (SD);
decrypt the encrypted internal data (400); and
restore the internal data (300) in the new version of the application (200);
**characterized in that** the application usage data includes tokens for electronic payment transactions and the control unit (CU) is further configured to:
load the encrypted internal data (400) into the upgraded application;
load the key (K) into the upgraded application; and
decrypt the encrypted internal data (400) using the key (K) within the upgraded application.

12. The secure element (SE) of claim 11, wherein the control unit (CU) is further configured to:
generate the key (K) fresh for encrypting at least the first portion of the internal data (310), preferably fresh for each encryption of at least the first portion of the internal data (310) and/or each upgrade of the application (100); and
store the key (K) in the secure storage portion (SD).
